# EUROPÄISCHE PATENTSCHRIFT

(11) **EP 2 513 469 B1**
(45) Veröffentlichungstag und Bekanntmachung des Hinweises auf die Patenterteilung: **01.01.2014**
(21) Anmeldenummer: 10776570.3
(22) Anmeldetag: 27.10.2010
(51) Int. Cl.: F03B 13/16, H02N 2/18

(54) **Verfahren zum Betrieb eines Energietransformers mit dielektrischem Polymer**
Method for operating an energy transformer having a dielectric polymer
Procédé pour faire fonctionner un transducteur d'énergie à polymère diélectrique

(30) Priorität: 19.12.2009 DE 102009059667
(43) Veröffentlichungstag der Anmeldung: 24.10.2012
(73) Patentinhaber: Robert Bosch GmbH, 70469 Stuttgart (DE)
(72) Erfinder: SERBAN, Ioan, 71640 Ludwigsburg (DE); FASS, Ulrich, 54296 Trier (DE); HERRMANN, Tobias, 63741 Aschaffenburg (DE); SCHWARZMANN, Dieter, 74081 Heilbronn (DE); STEINLECHNER, Siegbert, 71229 Leonberg (DE); HAGEMANN, Benjamin, 70839 Gerlingen (DE); SCHARMANN, Nik, 74321 Bietigheim-Bissingen (DE)
(74) Vertreter: Thürer, Andreas
(86) Internationale Anmeldenummer: PCT/EP2010/006550
(87) Internationale Veröffentlichungsnummer: WO 2011/072771

(56) Entgegenhaltungen:
- WO-A1-2009/144427
- US-A1- 2007 257 490
- US-A1- 2008 218 132
- PELRINE R ET AL: "DIELECTRIC ELASTOMERS: GENERATOR MODE FUNDAMENTALS AND APPLICATIONS", PROCEEDINGS OF SPIE, SPIE, USA, Bd. 4329, 1. Januar 2001 (2001-01-01), Seiten 148-156, XP001182121, ISSN: 0277-786X, DOI: DOI:10.1117/12.432640

## Beschreibung

Die Erfindung betrifft ein Verfahren zum Betrieb eines Energietransformers mit dielektrischem Polymer. Solche Energietransformer werden beispielsweise in Wellenenergiegeneratoren eingesetzt. Ein Wellenenergiegenerator weist zum Beispiel eine mehrschichtige dielektrische Polymerfolie mit einer Elektrode und einer Gegenelektrode eines mechanisch flexiblen Kondensators auf.

Aus der Druckschrift US 2007/257490 A1 ist ein Verfahren zur Wandlung mechanischer Energie in elektrische Energie unter Verwendung eines Energietransformers bekannt, der auf einer Kondensatoranordnung mit einem dielektrischen Polymer basiert.

Aus der Druckschrift PELRINE R ET AL: "DIELECTRIC ELASTOMERS: GENERATOR MODE FUNDAMENTALS AND APPLICATIONS", PROCEEDINGS OF SPIE, SPIE, USA, Bd. 4329, 1. Januar 2001, Seiten 148-156, XP001182121, ISSN: 0277-786X, 001:10.1117/12.432640 ist bekannt, das während der Entladung eines Kondensators ein Gleichgewichtszustand zwischen einer elastischen Kraft Fₑₗₐₛₜ und einer elektrischen Kraft Fₑₗₑₖ auftreten kann. Dieser Gleichgewichtszustand bewirkt, dass sich der Kondensator nicht weiter zurückdehnt, bis dass weitere Ladung entnommen wird.

Aus der Druckschrift DE 60 2004 008 639 T2 ist ein derartiger Wellenenergiegenerator bekannt, wobei ein Schwimmkörper ein Verbindungselement trägt, das mit dem Wellengang auf- und abgleitet und entsprechend elektrische Energie in einer das Verbindungselement umgebenden Spule erzeugt.

Aus der Druckschrift US 2007/0257490 A1 ist ein System und ein Verfahren zur Nutzung eines dielektrischen Polymers bekannt, um mechanische Energie, die ursprünglich in einer oder mehreren Wellen enthalten ist, in elektrische Energie umzuwandeln. Dazu weist der Generator ein maritimes Gerät auf, das die mechanische Energie einer Welle in mechanische Energie umwandelt, die als Eingang für den dielektrischen Polymertransformer geeignet ist. In dem dielektrischen Polymer sind Kondensatoren untergebracht, deren Kapazitäten sich bei Dehnungen und Stauchungen des Polymers verändern.

Der Generatorzyklus verläuft folgendermaßen: Am Anfang ist das Polymer entspannt und keine Ladung befindet sich auf den Kondensatorplatten. Anschließend wird das Polymer so gedehnt, dass der Kondensator eine hohe Kapazität aufweist. Dabei werden die Kondensatorplatten aufeinander zu bewegt. Anschließend werden Ladungen auf dem Kondensator aufgebracht und das Polymer wird wieder entspannt. Dadurch verringert sich die vornehmlich durch die zunehmende Distanz der Kondensatorplatten, was bei gleichbleibender Ladung zu höheren Spannungen führt. Die Ladungen werden abgeführt und aus der Spannungsdifferenz der Ladungen zwischen dem Ladevorgang und dem Entladevorgang wird elektrische Energie gewonnen, die in einer Last verbraucht werden kann. Nachteilig an einer solchen Anordnung ist, dass nicht während der Gesamtwellenbewegung mechanische Energie in elektrische Energie gewandelt wird.

Aufgabe der Erfindung ist es somit, einen Generator zu schaffen, der einen höheren Wirkungsgrad bereitstellt. Es ist ebenfalls Aufgabe der Erfindung, ein Verfahren zum Betrieb eines solchen Generators bereitzustellen.

Die Erfindung betrifft ein Verfahren zum Betrieb eines Energietransformers, der mindestens einen Kondensator aufweist. Der Kondensator enthält Kondensatorplatten und dielektrisches Polymer zwischen den Kondensatorplatten. Das Verfahren enthält folgende Schritte. Der Kondensator wird derart mit Hilfe einer ersten Kraft gedehnt, dass sich die Kapazität des Kondensators erhöht. Aufgrund der Elastizität des Polymers wirkt eine elastische Kraft Fₑₗₐₛₜ als Rückstellkraft. Die Kondensatorplatten werden auf unterschiedliche Potentiale geladen, wodurch eine elektrische Kraft die Kondensatorplatten zusammenzieht und wobei während des Ladens der Kondensatorplatten die erste Kraft verringert wird. Anschließend wird der Kondensator derart gedehnt, dass sich die Kapazität des Kondensators erniedrigt. Schließlich werden die Kondensatorplatten entladen. Für das Verfahren gilt, dass zum Zeitpunkt vor dem Schritt des Dehnens des Kondensators die elektrische Kraft Fₑₗₑₖ gleich der elastischen Kraft Fₑₗₐₛₜ ist, mit anderen Worten, die erste Kraft ist gleich Null.

Das angegebene Verfahren ermöglicht, dass die äußere Kraft vollständig durch die elektrische Kraft kompensiert wird. Damit ist es möglich, dass die Kondensatorplatten auf sehr hohe Spannungen geladen werden können. Die Ladung erfolgt soweit, dass die äußere erste Kraft vollständig kompensiert wird. Bei gegebener von außen zugefügter erster Kraft wird die Verformung des Kondensators möglichst gut ausgenutzt, indem eine möglichst hohe Spannung auf die Kondensatorplatten gebracht wird. Der Zyklus ist somit wesentlich effizienter als die Zyklen bei den im Stand der Technik bekannten Verfahren.

In einer Ausführungsform werden während des Schrittes des Dehnens des Kondensators derart, dass sich die Kapazität des Kondensators erhöht, bereits die Kondensatorplatten auf unterschiedliche Potentiale geladen. Vorteilhaft für die Umsetzung eines solchen Zyklus erscheint die Güteüberwachung des Dehnungszustands des Generators, da mit Hilfe der Ladungen gemessen werden kann, wie weit das Polymer bereits zusammengedrückt worden ist. Somit kann genau bestimmt werden, wann die gewünschte Dehnung erreicht ist, um dann mit dem Schritt des Ladens der Kondensatorplatten auf unterschiedliche Potentiale zu beginnen.

Erfindungsgemäß wird während des Schrittes des Ladens der Kondensatoren das Verringern der ersten Kraft in Abhängigkeit einer Messung der Dehnung des Kondensators vorgenommen. Ziel ist es, während des Schrittes des Ladens der Kondensatoren die Dehnung des Polymers möglichst konstant zu halten. Aus diesem Grund ist es sinnvoll, die Ausdehnung des Kondensators während dieses Schrittes zu messen.

Die Dehnung des Kondensators kann mit Positionssensoren erfolgen. Besonders vorteilhaft erscheint allerdings eine Auswertung der Dehnungsgeschwindigkeiten oder der Dehnungsbeschleunigung, da hierüber im Gegensatz zur reinen Auswertung der Position eine Vorhersage über das Erreichen einer Maximalposition möglich ist. Dies ist insbesondere für die Energiegewinnung aus regenerativen Quellen wichtig, da diese in ihrer Intensität stark schwanken.

Besonders geeignet als dielektrisches Polymer sind die Stoffe aus der Gruppe der dielektrischen Elastomere. Es versteht sich, dass die Kondensatorplatten sowie die Zuleitungen zu den Kondensatorplatten flexibel sein müssen, damit sie den Dehnungen des Kondensators folgen können.

Vorzugsweise wirkt während des Schrittes des Dehnens des Kondensators derart, dass sich die Kapazität des Kondensators erniedrigt, von außen eine zweite Kraft mit einem Betrag größer Null auf den Kondensator. Es ist möglich, eine besonders hohe Energiegewinnung zu erreichen, wenn der Generator beim Rückfedern nicht nur durch die eigenen Rückstellkräfte in die Ausgangsposition zurückfedert und damit Arbeit an den aufgebrachten Ladungen verrichtet wird, sondern wenn dieses Rückstellen durch eine zusätzliche äußere Kraft unterstützt wird. Dadurch ist es möglich, mehr Ladung aufzubringen, was zu einer höheren Energieausbeute führt.

In einer Ausführungsform ist während des Entladens des Kondensators die elektrische Kraft gleich der elastischen Kraft. Damit wird der Kondensator kontinuierlich entladen. In einer alternativen Ausführungsform wird die Spannung stufenweise während des Entladens verringert.

Allgemein lässt sich feststellen, dass die Kontrolle und Regelung der Spannung am Kondensator während der Entspannung des Systems, d.h. Verringerung der externen Kraft, so erfolgt, dass die elektrische Kraft im Gleichgewicht mit der externen Kraft ist. Dadurch kann auch ohne Vorspannung des Materials eine komplette Rückdehnung bzw. Streckung in die Ausgangslage erfolgen und dadurch mehr Energie gewandelt werden.

Insgesamt lässt sich durch diesen kraftgeregelten Betrieb der Ertrag des Energietransformers erhöhen.

Ausführungsbeispiele der Erfindung werden nun anhand der Figuren erläutert. Dabei veranschaulicht
- Figur 1: einen Energietransformer mit dielektrischem Polymer;
- Figur 2: schematisch die auf einem Kondensator des Energietransformers einwirkenden Kräfte;
- Figur 3: in einem Druck-Dehnungs-Diagramm die Schritte des Verfahrens zum Betrieb eines Energietransformers;
- Figur 4: in einem weiteren Druck-Dehnungs-Diagramm ein weiteres Ausführungsbeispiel des Verfahrens zum Betrieb eines Energietransformers.

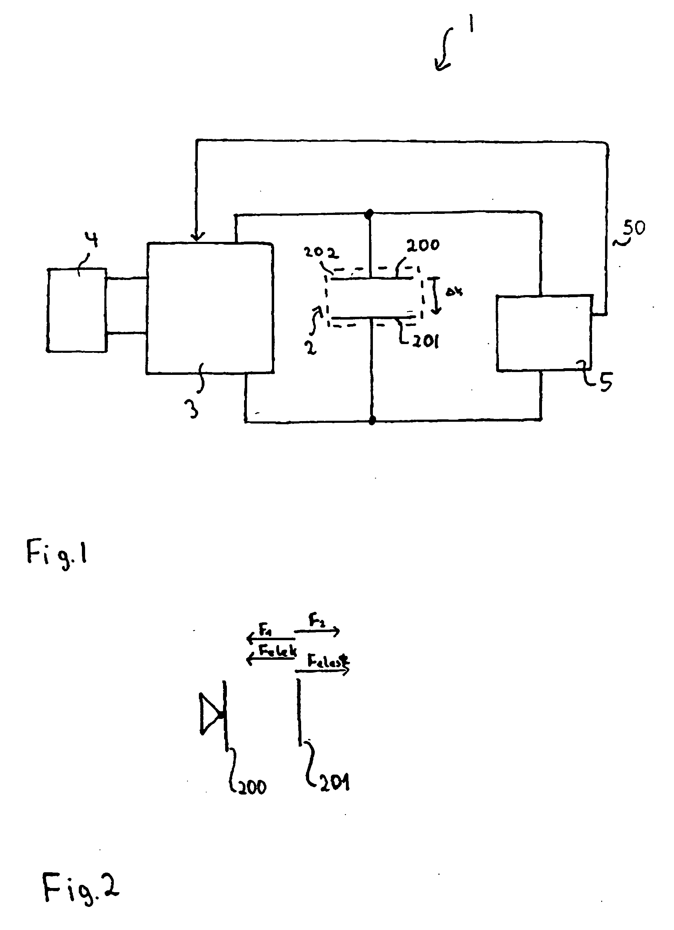

Figur 1 zeigt schematisch einen Energietransformer zum Umwandeln von mechanischer Energie in elektrische Energie. Der Energietransformer 1 weist einen Kondensator 2, eine Steuer- und Leistungselektronik 3, einen Energiespeicher 4 und eine Wegemesselektronik 5 auf. Der Kondensator 2 ist mit zwei Kondensatorplatten 200 und 201 schematisch dargestellt. Es versteht sich, dass der Kondensator eine große Vielzahl von parallel oder in Reihe geschalteten Kondensatorplatten enthalten kann.

Zwischen den Kondensatorplatten 200 und 201 und auch um die Kondensatorplatten 200 und 201 herum befindet sich ein dielektrisches Polymer 202, das in dieser Ausführungsform dielektrische Elastomere enthält. Das dielektrische Polymer 202 ist elastisch und kann durch äußere mechanische Kräfte verformt werden.

Das Polymer bildet einen Block, in dem die Kondensatorplatten vorgesehen sind und aus den Elektroden herausragen, über die die Kondensatorplatten elektrisch geladen und entladen werden können.

Durch Dehnung des Polymers 202 ändert sich der Abstand zwischen den Kondensatorplatten bzw. ändert sich auch die Fläche der Kondensatorplatten. Dementsprechend kommt es zu Änderungen der Kapazität des Kondensators 2 bei Dehnungen des Polymers. Geladen und Entladen werden die Kondensatorplatten 200 und 201 von der Steuer- und Leistungselektronik 3, die zwei Ausgänge aufweist, von denen einer mit einer Elektrode für die Kondensatorplatte 200 und der andere mit einer Elektrode für die Kondensatorplatte 201 elektrisch verbunden ist. Mit den Kondensatorplatten 200 und 201 sind auch zwei Eingänge der Wegemesselektronik 5 elektrisch verbunden, die misst, wie weit das Polymer gedehnt oder gestaucht ist. Die Wegemesselektronik erzeugt daraus ein Sensorsignal 50, das an die Steuer- und Leistungselektronik 3 weitergeleitet wird.

Die Steuer- und Leistungselektronik lädt und entlädt den Kondensator 2. Die gewonnene Energie wird in dem Energiespeicher 4 gespeichert. Von dem Energiespeicher wird eine nicht in der Figur gezeigte Last mit elektrischer Leistung versorgt.

Figur 2 zeigt schematisch die auf den Kondensator wirkenden Kräfte. Dabei ist die Kondensatorplatte 200 zur Veranschaulichung fest eingespannt, während die Kondensatorplatte 201 beweglich ist. Drückt eine äußere mechanische Kraft die beiden Kondensatorplatten 200 und 201 zusammen, so wird diese als erste Kraft F₁ bezeichnet. Werden die Kondensatorplatten auseinander gezogen, wird die Kraft als zweite Kraft F₂ bezeichnet. Sind die Kondensatorplatten 200 und 201 auf unterschiedliche Potentiale geladen, so gibt es eine elektrische Kraft, mit der die Kondensatorplatten sich gegenseitig anziehen. Diese elektrische Kraft Fₑₗₑₖ ist gleich der Ladung mal der elektrischen Feldstärke. Zudem gibt es eine elastische Kraft Fₑₗₐₛₜ. Wird das Polymer aus seiner Ruhelage gedrückt, entsteht eine elastische Kraft, die idealerweise proportional zur Auslenkung aus der Ruhelage ist. Ist der Kondensator gegenüber seiner Ruhelage zusammengedrückt, wirkt die elastische Kraft nach außen. Ist dagegen der Kondensator gegenüber seiner Ruhelage auseinander gezogen, wirkt die elastische Kraft nach innen.

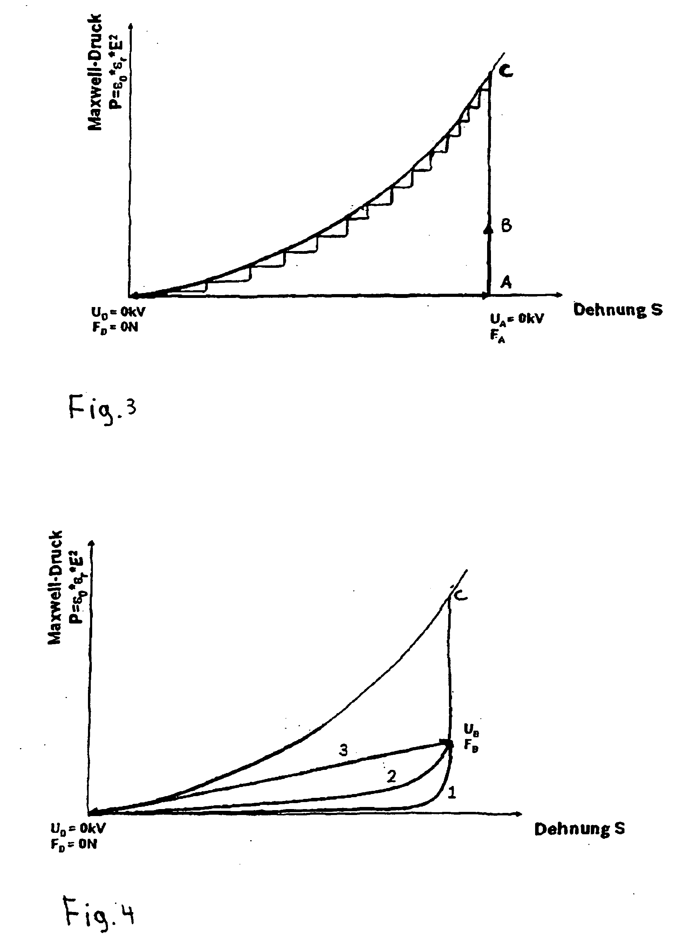

Figur 3 veranschaulicht in einem Druck-Dehnungsdiagramm das erfindungsgemäße Verfahren. In dem Diagramm ist der Maxwell-Druck, der sich aus der Influenzkonstante mal der Dielektrizitätskonstante mal der elektrischen Feldstärke mal der Feldstärke im Quadrat berechnet, über der Dehnung S des Polymers aufgetragen. Je weiter man sich dabei im Diagramm nach rechts bewegt, umso stärker ist die von außen wirkende Kraft, die den Kondensator zusammendrückt, so dass die Kapazität des Kondensators größer wird.

In der Ausgangslage befindet sich der Maxwell-Druck sowie die Dehnung im Ursprung. Das Polymer ist entspannt und auf den Kondensatorplatten 200 und 201 befindet sich keine Ladung. Im ersten Schritt wird der Kondensator mit einer ersten Kraft F₁ derart verformt, dass sich die Kapazität des Kondensators erhöht. In der maximalen Auslenkung ist dabei die erste Kraft F₁ gleich einem konstanten Wert F_{A}.

Beginnend in Punkt A wird die Spannung zwischen den Kondensatorplatten 200 und 201 erhöht und die Kondensatorplatten 200 und 201 werden auf unterschiedliche Potentiale geladen. Durch das Laden des Kondensators 2 erhöht sich die elektrische Kraft durch die Anziehung der Kondensatorplatten 200 und 201. Dementsprechend wird die erste Kraft F, verringert so lange, bis sie Null wird. Im Punkt C ist dieser Punkt erreicht. Im Punkt C ist die elektrische Kraft gleich der elastischen Kraft.

Ab dem Punkt C wird gemäß der gestuften Kurve Ladung in diskreten Schritten den Kondensatorplatten entzogen. In einer alternativen Ausführungsform wird kontinuierlich entladen. Dabei gilt während des gesamten Entladevorgangs, dass die elektrische Kraft gleich der elastischen Kraft ist. In einer weiteren Ausführungsform werden mit einer zweiten Kraft F2 der Kondensator und damit auch seine Kondensatorplatten auseinander gezogen.

Die Dehnung verringert sich, wodurch die Kapazität des Kondensators erniedrigt wird. Die Spannung zwischen den Kondensatorplatten erhöht sich dadurch. Die Kondensatorplatten werden anschließend entladen. Aufgrund der Spannungsdifferenz beim Laden und Entladen ist elektrische Energie erzeugt worden, die in dem Energiespeicher gespeichert wird.

Figur 4 zeigt ein weiteres Ausführungsbeispiel eines erfindungsgemäßen Verfahrens zum Betrieb eines Energietransformers. Im Unterschied zu Figur 3 befindet sich im Schritt des Auseinanderbewegens des Kondensators mit einer ersten Kraft derart, dass sich die Kapazität des Kondensators erhöht, der Potentialunterschied zwischen den Kondensatorplatten nicht auf Null, sondern es gibt etwas Ladung auf den Kondensatorplatten während dieses Schrittes.

### Bezugszeichenliste

- 1: Energietransformer
- 2: Kondensator
- 3: Steuer- und Leistungselektronik
- 4: Energiespeicher
- 5: Wegemesselektronik
- 50: Sensorsignal
- 200: Kondensatorplatte
- 201: Kondensatorplatte

## Patentansprüche

1. Verfahren zum Betrieb eines Energietransformers (1), der mindestens einen Kondensator (2) aufweist, wobei der Kondensator Kondensatorplatten (200, 201) und dielektrisches Polymer (202) zwischen den Kondensatorplatten aufweist,
wobei das Verfahren folgende Schritte enthält:
- Dehnen des Kondensators mit Hilfe einer ersten Kraft F₁ derart, dass sich die Kapazität des Kondensators (2) erhöht, wobei eine elastische Kraft Fₑₗₐₛₜ als Rückstellkraft wirkt;
- Laden von Kondensatorplatten (200, 201) auf unterschiedliche Potentiale, wobei eine elektrische Kraft Fₑₗₑₖ die Kondensatorplatten (200, 201) zusammenzieht, wobei während des Ladens der Kondensatorplatten (200, 201) die erste Kraft F1 verringert wird und der Abstand zwischen den Kondensatorplatten (200, 201) konstant bleibt;
- Dehnen des Kondensators (2) derart, dass sich die Kapazität des Kondensators (2) erniedrigt,
- Entladen der Kondensatorplatten (200, 201)
**dadurch gekennzeichnet, dass**
während des Schrittes des Ladens von Kondensatorplatten (2) das Verringern der ersten Kraft F₁ in Abhängigkeit einer Messung der Dehnung des Kondensators (2) erfolgt.

2. Verfahren nach Anspruch 1,
**dadurch gekennzeichnet, dass**
während des Schrittes des Dehnens des Kondensators (2) derart, dass sich die Kapazität des Kondensators (2) erhöht, die Kondensatorplatten (200, 201) auf unterschiedliche Potentiale geladen sind.

3. Verfahren nach Anspruch 1 oder 2,
**dadurch gekennzeichnet, dass**
die Dehnung des Kondensators (2) mit Hilfe einer Messung der Dehnungsgeschwindigkeiten oder der Dehnungsbeschleunigung erfolgt.

4. Verfahren nach einem der vorhergehenden Ansprüche,
**dadurch gekennzeichnet, dass**
das Polymer (202) dielektrische Elastomere enthält.

5. Verfahren nach einem der vorhergehenden Ansprüche,
**dadurch gekennzeichnet, dass** während des Schrittes des Dehnens des Kondensators (2) derart, dass sich die Kapazität des Kondensators (2) erniedrigt,
von außen eine zweite Kraft mit einem Betrag größer Null auf den Kondensator wirkt.

6. Verfahren nach einem der vorhergehenden Ansprüche,
**dadurch gekennzeichnet, dass**
während des Schrittes des Entladens der Kondensatorplatten (200, 201) gilt: Fₑₗₑₖ = Fₑₗₐₛₜ.

7. Verfahren nach einem der Ansprüche 1 bis 5,
**dadurch gekennzeichnet, dass**
während des Schrittes des Entladens die Spannung zwischen den Kondensatorplatten stufenweise verringert wird.

## Claims

1. Method for operating an energy transformer (1), which has at least one capacitor (2), wherein the capacitor has capacitor plates (200, 201) and dielectric polymer (202) between the capacitor plates,
wherein the method contains the following steps:
- extending the capacitor with the aid of a first force F₁ such that the capacitance of the capacitor (2) is increased, wherein an elastic force Fₑₗₐₛₜ acts as restoring force;
- charging capacitor plates (200, 201) to different potentials, wherein an electrical force F_{elec} contracts the capacitor plates (200, 201), wherein during charging of the capacitor plates (200, 201), the first force F₁ is reduced and the distance between the capacitor plates (200, 201) remains constant;
- extending the capacitor (2) in such a way that the capacitance of the capacitor (2) is reduced,
- discharging the capacitor plates (200, 201),
**characterized in that**
during the step of charging capacitor plates (200, 201), the reduction in the first force F₁ takes place depending on a measurement of the extension of the capacitor (2).

2. Method according to Claim 1,
**characterized in that**
during the step of extending the capacitor (2) such that the capacitance of the capacitor (2) is increased, the capacitor plates (200, 201) are charged to different potentials.

3. Method according to Claim 1 or 2,
**characterized in that**
the extension of the capacitor (2) is performed with the aid of a measurement of the strain rates or the strain acceleration.

4. Method according to one of the preceding claims,
**characterized in that**
the polymer (202) contains dielectric elastomers.

5. Method according to one of the preceding claims,
**characterized in that**
during the step of extending the capacitor (2) such that the capacitance of the capacitor (2) is reduced, a second force with a magnitude greater than zero acts on the capacitor from the outside.

6. Method according to one of the preceding claims,
**characterized in that**
during the step of discharging the capacitor plates (200, 201), the following applies: F_{elec} = Fₑₗₐₛₜ.

7. Method according to one of Claims 1 to 5,
**characterized in that**
during the discharging step, the voltage between the capacitor plates is reduced stepwise.

## Revendications

1. Procédé de fonctionnement d'un transformateur d'énergie (1), lequel comprend au moins un condensateur (2), le condensateur présentant des plaques de condensateur (200, 201) et un polymère diélectrique (202) entre les plaques de condensateur,
le procédé incluant les étapes suivantes :
- dilatation du condensateur à l'aide d'une première force F₁ de telle sorte que la capacité du condensateur (2) augmente, une force élastique Fₑₗₐₛₜ faisant office de force de rappel ;
- charge des plaques de condensateur (200, 201) à des potentiels différents, une force électrique Fₑₗₑₖ contractant les plaques de condensateur (200, 201) et, pendant la charge des plaques de condensateur (200, 201), la première force F₁ étant diminuée et l'écart entre les plaques de condensateur (200, 201) restant constant ;
- dilatation du condensateur (2) de telle sorte que la capacité du condensateur (2) diminue ;
- décharge des plaques de condensateur (200, 201)
**caractérisé en ce que**
pendant l'étape de charge des plaques de condensateur (200, 201), la diminution de la première force F₁ est effectuée en fonction d'une mesure de la dilatation du condensateur (2).

2. Procédé selon la revendication 1, **caractérisé en ce que** pendant l'étape de dilatation du condensateur (2) de telle sorte que la capacité du condensateur (2) augmente, les plaques de condensateur (200, 201) sont chargées à des potentiels différents.

3. Procédé selon la revendication 1 ou 2, **caractérisé en ce que** la dilatation du condensateur (2) est réalisée à l'aide d'une mesure des vitesses de dilatation ou de l'accélération de dilatation.

4. Procédé selon l'une des revendications précédentes, **caractérisé en ce que** le polymère (202) contient des élastomères diélectriques.

5. Procédé selon l'une des revendications précédentes, **caractérisé en ce que** pendant l'étape de dilatation du condensateur (2) de telle sorte que la capacité du condensateur (2) diminue, une deuxième force ayant une valeur supérieure à zéro agit depuis l'extérieur sur le condensateur.

6. Procédé selon l'une des revendications précédentes, **caractérisé en ce que** la règle suivante s'applique pendant l'étape de décharge des plaques de condensateur (200, 201) : Fₑₗₑₖ = Fₑₗₐₛₜ.

7. Procédé selon l'une des revendications 1 à 5, **caractérisé en ce que** pendant l'étape de décharge, la tension entre les plaques de condensateur est réduite par paliers.
